(19)

Europäisches
Patentamt

European
Patent Office

Office européen
des brevets

(11)     **EP 4 471 381 A1**

(12)     **EUROPEAN PATENT APPLICATION**

(43) Date of publication:
**04.12.2024 Bulletin 2024/49**

(21) Application number: **23213308.2**

(22) Date of filing: **30.11.2023**

(51) International Patent Classification (IPC):
**G01C 21/36** *(2006.01)*      **G06V 20/56** *(2022.01)*
**G01S 17/89** *(2020.01)*

(52) Cooperative Patent Classification (CPC):
**G01C 21/3602; G06V 20/588**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.05.2023 CN 202310632364**

(71) Applicant: **Chongqing Changan Automobile Co.,
Ltd.
Chongqing 400023 (CN)**

(72) Inventors:
• **CAO, Chuan**
  **Chongqing 400023 (CN)**
• **KANG, Yifei**
  **Chongqing 400023 (CN)**
• **TANG, Zhaofeng**
  **Chongqing 400023 (CN)**

(74) Representative: **M. Zardi & Co S.A.
Via G. B. Pioda, 6
6900 Lugano (CH)**

(54)     **LANE LINE POINT CLOUD SPLICING METHOD AND APPARATUS, DEVICE, MEDIUM, AND VEHICLE**

(57)     A lane line point cloud splicing method and apparatus, a device, a medium, and a vehicle are provided, relating to the field of lane line technologies. The method includes: obtaining each frame of lane line point cloud and each frame of integrated inertial navigation data in real time; performing track calculation on the each frame of integrated inertial navigation data to determine a body posture corresponding to the each frame of integrated inertial navigation data, and storing the body posture corresponding to the each frame of integrated inertial navigation data and a corresponding first timestamp into a posture container; determining a body posture corresponding to the current frame of lane line point cloud through a posture difference according to a second timestamp corresponding to the current frame of lane line point cloud and the posture container; storing the current frame of lane line point cloud and the corresponding body posture into a point cloud queue with a fixed length; and splicing all lane line point clouds in the point cloud queue to obtain a multi-frame lane line splicing point cloud. Through the method, a long enough lane line with reliable precision can be formed, and the probability of deviation of a vehicle position from a true position due to mismatching can be reduced.

Fig. 4

EP 4 471 381 A1

## Description

### Field of the Invention

Embodiments of the present disclosure relate to the field of lane line technologies, and in particular, to a lane line point cloud splicing method and apparatus, a device, a medium, and a vehicle.

### Background of the Invention

At present, forward looking cameras are one of the basic sensors for intelligent vehicles to achieve autonomous driving. Visual perception algorithms can provide rich road information, such as lane line information for positioning. Lane lines play an extremely important role in autonomous driving systems of intelligent vehicles. Lane lines with high precision and good robustness have always been one of the key technologies in research.

In related technologies, commonly used lane line recognition algorithms often lead to mismatching between a vehicle and a high-precision map according to a detected lane line point cloud in a positioning process in cases of missing and mistaken detection of vehicles lines and excessive noise caused by poor data, namely, in cases of poor precision of a recognized single-frame lane line point cloud. As a result, the vehicle deviates from a true position. Therefore, how to reduce the probability of mismatching in a case of poor single-frame lane line point cloud data is an urgent technical problem to be solved by the present disclosure.

### Summary of the Invention

Embodiments of the present disclosure provide a lane line point cloud splicing method and apparatus, a device, a medium, and a vehicle, aiming to splice multiple frames of lane line point clouds through body postures to reduce the probability of deviation of a vehicle position from a true position due to mismatching.

A first aspect of the embodiments of the present disclosure provides a lane line point cloud splicing method, including:

obtaining each frame of lane line point cloud in real time;

obtaining each frame of integrated inertial navigation data in real time;

performing track calculation on the each frame of integrated inertial navigation data to determine a body posture corresponding to the each frame of integrated inertial navigation data, and storing the body posture corresponding to the each frame of integrated inertial navigation data and a corresponding first timestamp into a posture container;

determining a body posture corresponding to the current frame of lane line point cloud through a posture difference according to a second timestamp corresponding to the current frame of lane line point cloud and the posture container;

storing the current frame of lane line point cloud and the body posture corresponding to the current frame of lane line point cloud into a point cloud queue with a fixed length, where the point cloud queue includes a plurality of historical frames of lane line point clouds and body postures corresponding to the plurality of historical frames of lane line point clouds; and

splicing all lane line point clouds in the point cloud queue to obtain a multi-frame lane line splicing point cloud.

Optionally, the integrated inertial navigation data at least include a speed and an angular acceleration; and the performing track calculation on the each frame of integrated inertial navigation data to determine a body posture corresponding to the each frame of integrated inertial navigation data includes:
determining the body posture corresponding to the current frame of integrated inertial navigation data according to the speed and angular acceleration in the previous frame of integrated inertial navigation data, a time interval between two frames of integrated inertial navigation data, and a vehicle displacement and rotation matrix corresponding to the previous frame of integrated inertial navigation data.

Optionally, the determining the body posture corresponding to the current frame of integrated inertial navigation data according to the speed and angular acceleration in the previous frame of integrated inertial navigation data, a time interval between two frames of integrated inertial navigation data, and a vehicle displacement and rotation matrix corresponding to the previous frame of integrated inertial navigation data includes:
obtaining the body posture corresponding to the current frame of integrated inertial navigation data through a first formula, a second formula, and a third formula:

the first formula:

$$p_n = p_{n-1} + R_{n-1} \cdot v_{n-1} \cdot \Delta t$$

the second formula:

$$R_n = R_{n-1} \cdot \dot{\omega}_{n-1} \cdot \Delta t$$

the third formula:

$$T_n = \begin{bmatrix} R_n & p_n^T \\ 0^T & 1 \end{bmatrix}$$

where $p_{n-1}$ and $p_n$ respectively represent vehicle displacements corresponding to the previous frame of integrated inertial navigation data and the current frame of integrated inertial navigation data, $R_{n-1}$ and $R_n$ respectively represent rotation matrices corresponding to the previous frame of integrated inertial navigation data and the current frame of integrated inertial navigation data, $v_{n-1}$ represents the speed in the previous frame of integrated inertial navigation data, $\Delta t$ represents the time interval between two frames of integrated inertial navigation data, $\dot{\omega}_{n-1}$ represents the angular acceleration in the previous frame of integrated inertial navigation data, and $T_n$ represents the body posture corresponding to the current frame of integrated inertial navigation data.

Optionally, the determining a body posture corresponding to the current frame of lane line point cloud through a posture difference according to a second timestamp corresponding to the current frame of lane line point cloud and the posture container includes:

determining, in the posture container, first timestamps corresponding to two consecutive frames of integrated inertial navigation data adjacent to the second timestamp and body postures corresponding to the first timestamps corresponding to the two consecutive frames of integrated inertial navigation data respectively according to the second timestamp corresponding to the current frame of lane line point cloud;

determining a compensation factor according to the second timestamp corresponding to the current frame of lane line point cloud and the first timestamps corresponding to the two consecutive frames of integrated inertial navigation data; and

determining the body posture corresponding to the current frame of lane line point cloud according to the compensation factor and the body postures corresponding to the first timestamps corresponding to the two consecutive frames of integrated inertial navigation data.

Optionally, the determining a compensation factor according to the second timestamp corresponding to the current frame of lane line point cloud and the first timestamps corresponding to the two consecutive frames of integrated inertial navigation data includes:
determining the compensation factor through a fourth formula:

the fourth formula:

$$s = (t_{next} - t_c) / (t_{next} - t_{prev})$$

the determining the body posture corresponding to the current frame of lane line point cloud according to the compensation factor and the body postures corresponding to the first timestamps corresponding to the two consecutive frames of integrated inertial navigation data includes:
obtaining the body posture corresponding to the current frame of lane line point cloud through a fifth formula, a sixth formula, and a seventh formula:

the fifth formula:

$$p_c = p_{prev} \cdot s + p_{next} \cdot (1 - s)$$

the sixth formula:

$$R_c = R_{next} \cdot R_{prev} \cdot s$$

the seventh formula:

$$T_c = \begin{bmatrix} R_c & p_c^T \\ 0^T & 1 \end{bmatrix}$$

where $s$ represents the compensation factor, $t_{prev}$ and $t_{next}$ respectively represent the first timestamps corresponding to the two consecutive frames of integrated inertial navigation data adjacent to the second timestamp, $t_c$ represents the second timestamp corresponding to the current frame of lane line point cloud, $p_{prev}$ and $p_{next}$ respectively represent vehicle displacements in the body postures corresponding to the first timestamps corresponding to the two consecutive frames of integrated inertial navigation data, $p_c$ represents a vehicle displacement corresponding to the current frame of lane line point cloud, $R_{prev}$ and $R_{next}$ respectively represent rotation matrices in the body postures corresponding to the first timestamps corresponding to the two consecutive frames of integrated inertial navigation data, $R_c$ represents a rotation matrix corresponding to the current frame of lane line point cloud, and $T_c$ represents the body posture corresponding to the current frame of lane line point cloud.

Optionally, the splicing all lane line point clouds in the point cloud queue to obtain a multi-frame lane line splicing point cloud includes:

performing a matrix operation on the body posture corresponding to each frame of other lane line point cloud in the point cloud queue and an inverse of the body posture corresponding to the current frame of lane line point cloud, to obtain a coordinate system transformation relationship between the each frame of other lane line point cloud and the current frame of lane line point cloud, where the other lane line point cloud is a lane line point cloud in the point cloud queue except the current frame of lane line point cloud; and

projecting the each frame of other lane line point cloud to a body coordinate system of the current frame of lane line point cloud through the corresponding coordinate system transformation relationship, to obtain the multi-frame lane line splicing point cloud under the body coordinate system of the current frame of lane line point cloud.

Optionally, after the determining a body posture corresponding to the current frame of lane line point cloud through a posture difference according to a second timestamp corresponding to the current frame of lane line point cloud and the posture container, the method further includes:
deleting timestamps prior to the second timestamp corresponding to the current frame of lane line point cloud and body postures corresponding to the timestamps in the posture container.

Optionally, the method further includes:
rasterizing and down-sampling the multi-frame lane line splicing point cloud to obtain a down-sampled multi-frame lane line splicing point cloud.

Optionally, the rasterizing and down-sampling the multi-frame lane line splicing point cloud to obtain a down-sampled multi-frame lane line splicing point cloud includes:

rasterizing the multi-frame lane line splicing point cloud to obtain a plurality of grids; and

down-sampling all point clouds in each of the plurality of grids respectively to obtain a single target point cloud of each grid, and determining the down-sampled multi-frame lane line splicing point cloud according to the single target point cloud of each grid.

Optionally, the obtaining each frame of lane line point cloud in real time includes:

obtaining each frame of lane line point cloud data output by a vehicle forward looking camera in real time, where the lane line point cloud data at least include: an initial lane line point cloud, a lane line starting point, and a lane line length; and

selecting a lane line point cloud segment of a preset distance from the initial lane line point cloud according to the lane line starting point and the lane line length, and using the lane line point cloud segment of the preset distance as the each frame of lane line point cloud.

A second aspect of the embodiments of the present disclosure provides a lane line point cloud splicing apparatus, including:

a point cloud obtaining module, configured to obtain each frame of lane line point cloud in real time;

a data obtaining module, configured to obtain each frame of integrated inertial navigation data in real time;

a first determination module, configured to perform track calculation on the each frame of integrated inertial navigation data to determine a body posture corresponding to the each frame of integrated inertial navigation data, and store the body posture corresponding to the each frame of integrated inertial navigation data and a corresponding first timestamp into a posture container;

a second determination module, configured to determine a body posture corresponding to the current frame of lane line point cloud through a posture difference according to a second timestamp corresponding to the current frame of lane line point cloud and the posture container;

a queue storage module, configured to store the current frame of lane line point cloud and the body posture corresponding to the current frame of lane line point cloud into a point cloud queue with a fixed length, where the point cloud queue includes a plurality of historical frames of lane line point clouds and body postures corresponding to the plurality of historical frames of lane line point clouds; and

a splicing module, configured to splice all lane line point clouds in the point cloud queue to obtain a multi-frame lane line splicing point cloud.

Optionally, the integrated inertial navigation data at least include a speed and an angular acceleration; and the first determination module includes:
a first determination submodule, configured to determine the body posture corresponding to the current frame of integrated inertial navigation data according to the speed and angular acceleration in the previous frame of integrated inertial navigation data, a time interval between two frames of integrated inertial navigation data, and a vehicle displacement and rotation matrix corresponding to the previous frame of integrated inertial navigation data.

Optionally, the first determination submodule includes:

a first body posture determination submodule, configured to obtain the body posture corresponding to the current frame of integrated inertial navigation data through a first formula, a second formula, and a third formula:

the first formula:

$$p_n = p_{n-1} + R_{n-1} \cdot v_{n-1} \cdot \Delta t$$

the second formula:

$$R_n = R_{n-1} \cdot \dot{\omega}_{n-1} \cdot \Delta t$$

the third formula:

$$T_n = \begin{bmatrix} R_n & p_n^T \\ 0^T & 1 \end{bmatrix}$$

where $p_{n-1}$ and $p_n$ respectively represent vehicle displacements corresponding to the previous frame of integrated inertial navigation data and the current frame of integrated inertial navigation data, $R_{n-1}$ and $R_n$ respectively represent rotation matrices corresponding to the previous frame of integrated inertial navigation data and the current frame of integrated inertial navigation data, $v_{n-1}$ represents the speed in the previous frame of integrated inertial navigation data, $\Delta t$ represents the time interval between two frames of integrated inertial navigation data, $\dot{\omega}_{n-1}$ represents the angular acceleration in the previous frame of integrated inertial navigation data, and $T_n$ represents the body posture corresponding to the current frame of integrated inertial navigation data.

Optionally, the second determination module includes:

a timestamp determination submodule, configured to determine, in the posture container, first timestamps corresponding to two consecutive frames of integrated inertial navigation data adjacent to the second timestamp and body postures corresponding to the first timestamps corresponding to the two consecutive frames of integrated inertial navigation data respectively according to the second timestamp corresponding to the current frame of lane line point cloud;

a factor determination submodule, configured to determine a compensation factor according to the second timestamp corresponding to the current frame of lane line point cloud and the first timestamps corresponding to the two consecutive frames of integrated inertial navigation data; and

a second body posture determination submodule, configured to determine the body posture corresponding to the current frame of lane line point cloud according to the compensation factor and the body postures corresponding to the first timestamps corresponding to the two consecutive frames of integrated inertial navigation data.

Optionally, the factor determination submodule includes:
a compensation factor determination submodule, configured to determine the compensation factor through a fourth formula:

the fourth formula:

$$s = (t_{next} - t_c) / (t_{next} - t_{prev})$$

the second body posture determination submodule includes:
a third body posture determination submodule, configured to obtain the body posture corresponding to the current frame of lane line point cloud through a fifth formula, a sixth formula, and a seventh formula:

the fifth formula:

$$p_c = p_{prev} \cdot s + p_{next} \cdot (1 - s)$$

the sixth formula:

$$R_c = R_{next} \cdot R_{prev} \cdot s$$

the seventh formula:

$$T_c = \begin{bmatrix} R_c & p_c^T \\ 0^T & 1 \end{bmatrix}$$

where $s$ represents the compensation factor, $t_{prev}$ and $t_{next}$ respectively represent the first timestamps corresponding to the two consecutive frames of integrated inertial navigation data adjacent to the second timestamp, $t_c$ represents the second timestamp corresponding to the current frame of lane line point cloud, $p_{prev}$ and $p_{next}$ respectively represent vehicle displacements in the body postures corresponding to the first timestamps corresponding to the two consecutive frames of integrated inertial navigation data, $p_c$ represents a vehicle displacement corresponding to the current frame of lane line point cloud, $R_{prev}$ and $R_{next}$ respectively represent rotation matrices in the body postures corresponding to the first timestamps corresponding to the two consecutive frames of integrated inertial navigation data, $R_c$ represents a rotation matrix corresponding to the current frame of lane line point cloud, and $T_c$ represents the body posture corresponding to the current frame of lane line point cloud.

Optionally, the splicing module includes:

a transformation relationship determination submodule, configured to perform a matrix operation on the body posture corresponding to each frame of other lane line point cloud in the point cloud queue and an inverse of the body posture corresponding to the current frame of lane line point cloud, to obtain a coordinate system transformation relationship between the each frame of other lane line point cloud and the current frame of lane line point cloud, where the other lane line point cloud is a lane line point cloud in the point cloud queue except the current frame of lane line point cloud; and

a splicing submodule, configured to project the each frame of other lane line point cloud to a body coordinate system of the current frame of lane line point cloud through the corresponding coordinate system transformation relationship, to obtain the multi-frame lane line splicing point cloud under the body coordinate system of the current frame of lane line point cloud.

Optionally, the apparatus further includes:
a deletion module, configured to delete timestamps prior to the second timestamp corresponding to the current frame of lane line point cloud and body postures corresponding to the timestamps in the posture container after the body posture corresponding to the current frame of lane line point cloud is determined through the posture difference according to the second timestamp corresponding to the current frame of lane line point cloud and the posture container.
Optionally, the apparatus further includes:
a down-sampling processing module, configured to rasterize and down-sample the multi-frame lane line splicing point cloud to obtain a down-sampled multi-frame lane line splicing point cloud.
Optionally, the down-sampling processing module includes:

a rasterization submodule, configured to rasterize the multi-frame lane line splicing point cloud to obtain a plurality of grids; and

a down-sampling processing submodule, configured to down-sample all point clouds in each of the plurality of grids respectively to obtain a single target point cloud of each grid, and determine the down-sampled multi-frame lane line splicing point cloud according to the single target point cloud of each grid.

Optionally, the point cloud obtaining module includes:

a data obtaining submodule, configured to obtain each frame of lane line point cloud data output by a vehicle forward looking camera in real time, where the lane line point cloud data at least include: an initial lane line point cloud, a lane line starting point, and a lane line length; and

a selection submodule, configured to select a lane line point cloud segment of a preset distance from the initial lane line point cloud according to the lane line starting point and the lane line length, and use the lane line point cloud segment of the preset distance as the each frame of lane line point cloud.

A third aspect of the embodiments of the present disclosure provides an electronic device. The electronic device includes a memory, a processor, and a computer program stored in the memory and executable on the processor. When the computer program is executed by the processor, the lane line point cloud splicing method according to the first aspect of the embodiments of the present disclosure is implemented.
A fourth aspect of the embodiments of the present disclosure provides a computer-readable storage medium. The computer-readable storage medium stores a computer program. When the computer program is executed by a processor, the lane line point cloud splicing method according to the first aspect of the embodiments of the present disclosure is implemented.
A fifth aspect of the embodiments of the present disclosure provides a vehicle. The vehicle includes a positioning system, and the positioning system is configured to perform the lane line point cloud splicing method according to the first aspect of the embodiments of the present disclosure.
According to the lane line point cloud splicing method provided by the embodiments of the present disclosure, track calculation is performed on each frame of integrated inertial navigation data obtained in real time to obtain a body posture corresponding to the each frame of integrated inertial navigation data, and the body posture and a corresponding first timestamp are stored in a posture container; for the current frame of lane line point cloud obtained in real time, a body posture corresponding to the current frame of lane line point cloud is obtained through a posture difference based on a second timestamp corresponding to the current frame of lane line point cloud and the posture container, the current frame of lane line point cloud and the corresponding body posture are stored into a point cloud queue including a plurality of consecutive historical frames of lane line point clouds and corresponding body postures, and then all lane line point clouds in the point cloud queue are spliced to obtain a multi-frame lane line splicing point cloud, where a plurality of consecutive single frames of lane lines are accumulated, historical frames of lane line point clouds are spliced, and the weight of a single frame of lane line point cloud with poor quality is reduced through the historical frames of lane line point clouds to form a long enough multi-frame lane line splicing point cloud with reliable precision, thereby reducing the probability of deviation of a vehicle position from a true position due to mismatching.

**Brief Description of the Drawings**

In order to illustrate the technical solutions of the embodiments of the present disclosure more clearly, the accompanying drawings required for use in the description of the embodiments of the present disclosure will be briefly introduced below. Apparently, the accompanying drawings in the following description show only some embodiments of the present disclosure. Those of ordinary skill in the art may derive other drawings according to the accompanying drawings without any creative efforts.

Fig. 1 is a schematic diagram illustrating the impact of a z-axis mounting height of a forward looking camera on a recognized lane width in related technologies;

Fig. 2 is a schematic diagram illustrating the impact of a roll angle of a forward looking camera around an x-axis on a recognized lane width in related technologies;

Fig. 3 is a schematic diagram illustrating the impact of a cross slope of a road on a recognized lane width in related technologies;

Fig. 4 is a flowchart of a lane line point cloud splicing method according to an embodiment of the present disclosure;

Fig. 5 shows a single-frame lane line point cloud extracted by semantic segmentation in a body coordinate system according to an embodiment of the present disclosure;

Fig. 6 is a splicing effect diagram of a multi-frame lane line point cloud according to an embodiment of the present disclosure;

Fig. 7 is a schematic diagram of rasterization of a lane line point cloud according to an embodiment of the present disclosure;

Fig. 8 is a schematic flowchart of a lane line point cloud splicing method according to an embodiment of the present disclosure;

Fig. 9 is a structural block diagram of a lane line point cloud splicing apparatus according to an embodiment of the present disclosure; and

Fig. 10 is a schematic diagram of an electronic device according to an embodiment of the present disclosure.

**Detailed Description of the Embodiments**

The technical solutions in the embodiments of the present disclosure will be clearly and completely described below with reference to the accompanying drawings in the embodiments of the present disclosure. Apparently, the described embodiments are some but not all of the embodiments of the present disclosure. All other embodiments obtained by those of ordinary skill in the art based on the embodiments in the present disclosure without any creative effort fall within the scope of protection of the present disclosure.

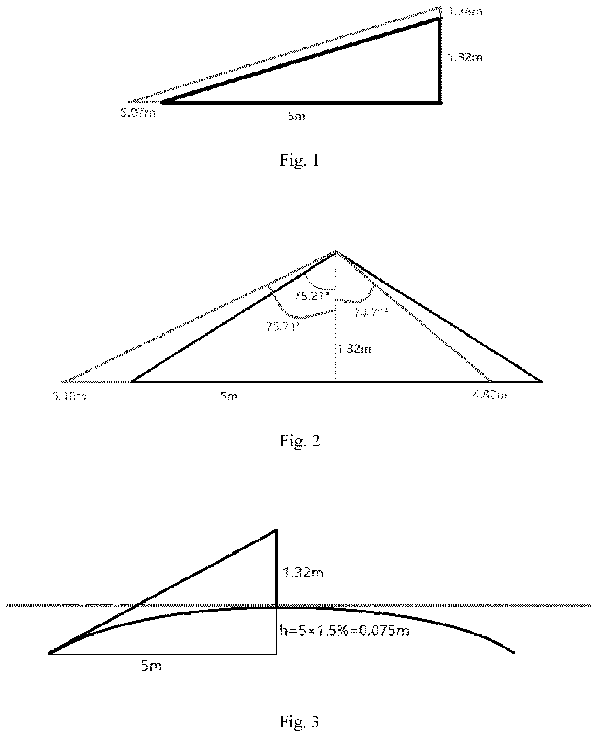

As mentioned earlier, the current lane line recognition technology cannot guarantee precision stably. In practical applications, it has been found that the fitted single-frame lane line point cloud has poor precision at a near end and a far end. This is because the perception precision of a lane line is related to factors such as a mounting height of a forward looking camera on a z-axis, a roll angle around an x-axis, and a cross slope of a road (see Figs. 1, 2, and 3). Fig. 1 is a schematic diagram illustrating the impact of a z-axis mounting height of a forward looking camera on a recognized lane width in related technologies. As shown in Fig. 1, it is assumed that the actual mounting height of the forward facing camera is 1.32 meters, the lane width is 5 meters, and a z-axis calibration result is 1.34 meters. $5 \div 1.32 \times 1.34 = 5.07$ meters, indicating that a lane width error caused by an error of 0.02 meter on the z-axis is 0.07 meter. Fig. 2 is a schematic diagram illustrating the impact of a roll angle of a forward looking camera around an x-axis on a recognized lane width in related technologies. As shown in Fig. 2, it is assumed that the actual roll angle of the forward looking camera is 75.21 degrees and the calibration error is 0.5 degree. $\tan 75.71° \times 1.32 = 5.18$ meters, and $\tan 74.71° \times 1.32 = 4.82$ meters. That is, a lane width error caused by the roll angle error of 0.5° is 0.18 meter. Fig. 3 is a schematic diagram illustrating the impact of a cross slope of a road on a recognized lane width in related technologies. As shown in Fig. 3, it is assumed that the cross slope of the road is 1.5% and a height increment of the road is $5 \times 1.5\% = 0.075$ meter. $5 \div (1.32 + 0.075) \times 1.32 = 4.73$ meters, indicating that a lane width error caused by the 1.5% cross slope is 0.27 meter. It can be seen that if lane line point cloud information at the near end and far end of the single-frame lane line point cloud is discarded and only lane line point cloud information located in a middle segment is used, a few lane line point clouds can be used for matching with a high-precision map, which often leads to mismatching in a vehicle in a positioning process and then deviation from its true position.

Therefore, in order to at least partially solve one or more of the above problems and other potential problems, the embodiments of the present disclosure provide a lane line point cloud splicing method, which obtains a corresponding body posture of each frame of integrated inertial navigation data by track calculation, that is, position and posture changes of a vehicle in a three-dimensional space, obtains a current frame of lane line point cloud, completes linear interpolation of the posture using a timestamp corresponding to the current frame of lane line point cloud and each body posture to obtain a body posture corresponding to each frame of lane line point cloud, and finally projects historical frames of lane line point clouds to the current frame through the body postures to complete splicing of the lane line point cloud, so as to form a long enough lane line with reliable precision to reduce the probability of deviation of a vehicle position from a true position due to mismatching.

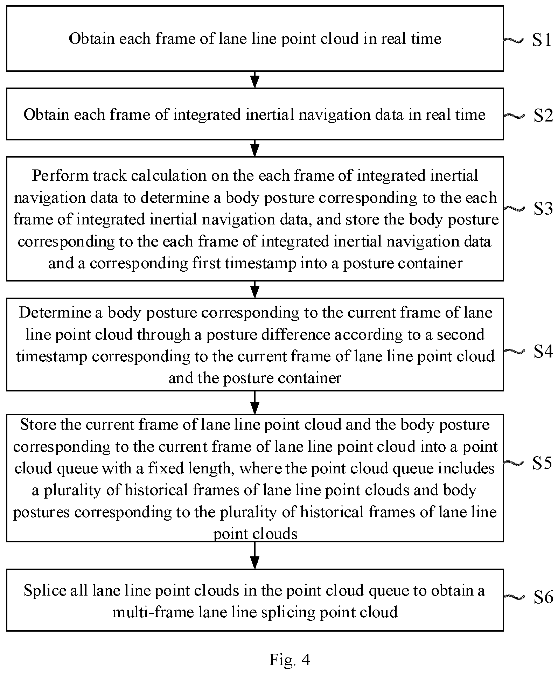

Refer to Fig. 4. Fig. 4 is a flowchart of a lane line point cloud splicing method shown in an embodiment of the present disclosure. As shown in Fig. 4, the lane line point cloud splicing method in this embodiment may be applied to a positioning system. The positioning system may be a vehicle positioning system or a positioning system in a vehicle back-end server, which is not limited by this embodiment. The lane line point cloud splicing method in this embodiment may include the following steps:

At step S1: each frame of lane line point cloud is obtained in real time.

In this embodiment, each frame of lane line point cloud provided by a vehicle forward looking camera in real time may be obtained. The vehicle forward looking camera in this embodiment may provide a lane line point cloud corresponding to each frame of image after semantic segmentation for each frame of captured image, that is, provide each frame of lane line point cloud. Each frame of lane line point cloud semantically segmented by the vehicle forward looking camera may be fitted by a cubic curve equation described by four parameters $a_0$, $a_1$, $a_2$, $a_3$. The cubic curve equation is as shown below:

$$y = a_0 + a_1 x + a_2 x^2 + a_3 x^3$$

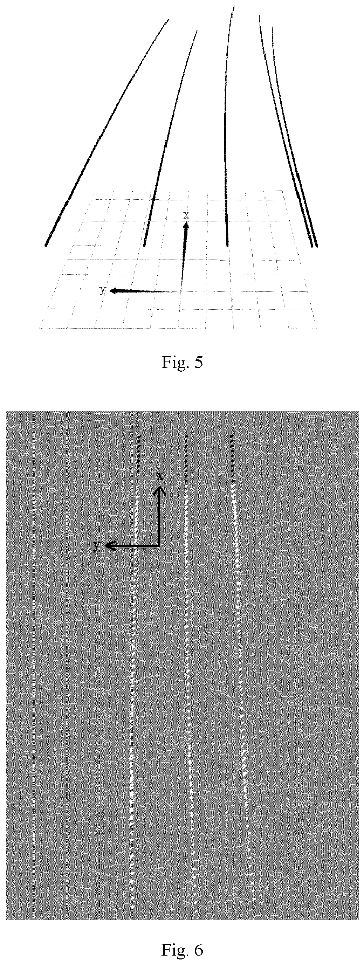

Here, $a_0$ is a constant term of the cubic curve parameters, $a_1$ is a primary term of the cubic curve parameters, $a_2$ is a quadratic term of the cubic curve parameters, $a_3$ is a cubic term of the cubic curve parameters, $x$ is a longitudinal distance between the lane line point cloud and the vehicle, $y$ is a lateral distance between the lane line point cloud and the vehicle, $(x, y)$ is coordinates of any point in the lane line point cloud, $x$ is determined by the vehicle forward looking camera, $y$ is calculated by the cubic curve equation, and "the vehicle" is an origin of a body coordinate system. In this embodiment, the body coordinate system used for the lane line point cloud is that x points to the front of the vehicle, y is perpendicular to x and points to a left side of the vehicle body, and the origin is at the center of a rear axle of the vehicle, following the right-hand rule. Fig. 5 shows a single-frame lane line point cloud extracted by semantic segmentation in a body coordinate system according to an embodiment of the present disclosure.

At step S2: each frame of integrated inertial navigation data is obtained in real time.

In this embodiment, each frame of integrated inertial navigation data collected by a vehicle integrated inertial navigation system may be obtained in real time. In this embodiment, the vehicle integrated inertial navigation system may collect INS data (namely, integrated inertial navigation data) of the vehicle in real time, and send each frame of integrated inertial navigation data to a positioning system for calculating a position and posture of the vehicle in a three-dimensional space. The vehicle forward looking camera and the vehicle integrated inertial navigation system in this embodiment need to synchronize in time, and each frame of lane line point cloud and each frame of integrated inertial navigation data need to be timed based on the same clock source to ensure time synchronization.

At step S3: track calculation is performed on the each frame of integrated inertial navigation data to determine a body posture corresponding to the each frame of integrated inertial navigation data, and the body posture corresponding to the each frame of integrated inertial navigation data and a corresponding first timestamp are stored into a posture container.

In this embodiment, after obtaining each frame of integrated inertial navigation data provided by the vehicle integrated inertial navigation system, the positioning system may perform track calculation on the each frame of integrated inertial navigation data. Specifically, a body posture at a starting time may be set as an identity matrix to obtain a relationship between two adjacent frames of integrated inertial navigation data, and track calculation is performed from a starting point through the obtained integrated inertial navigation data, so as to determine the body posture corresponding to the each frame of integrated inertial navigation data, namely, obtain a body posture at the current time. The starting time in this embodiment is a time when the lane line point cloud splicing method is activated, and the starting point is a corresponding vehicle position when the lane line point cloud splicing method is activated.

After the body posture corresponding to the each frame of integrated inertial navigation data is determined, the body posture corresponding to the each frame of integrated inertial navigation data and the first timestamp corresponding to the each frame of integrated inertial navigation data may be stored into the posture container. The first timestamp in this embodiment is a timestamp corresponding to the integrated inertial navigation data, and the posture container stores body postures corresponding to multiple frames of integrated inertial navigation data and first timestamps corresponding to the multiple frames of integrated inertial navigation data.

At step S4: a body posture corresponding to the current frame of lane line point cloud is determined through a posture difference according to a second timestamp corresponding to the current frame of lane line point cloud and the posture container.

In this embodiment, each frame of lane line point cloud may be obtained in real time, and the latest obtained lane line point cloud is the current frame of lane line point cloud. However, due to the inconsistency between the working frequency of the vehicle forward looking camera and the working frequency of the vehicle integrated inertial navigation system, the first timestamp corresponding to any frame of integrated inertial navigation data is different from the second timestamp corresponding to the lane line point cloud. In this case, the positioning system may determine the body posture corresponding to the current frame of lane line point cloud through the posture difference according to the second timestamp corresponding to the current frame of lane line point cloud, the first timestamp in the posture container, and the body postures in the posture container, so as to determine a body posture corresponding to each frame of lane line point cloud. Specifically, the body posture corresponding to each frame of lane line point cloud in the body coordinate system may be determined through a linear difference according to the second timestamp corresponding to the lane line point cloud and the first timestamp corresponding to the integrated inertial navigation data. The second timestamp in this embodiment is a timestamp corresponding to the lane line point cloud, namely, a timestamp corresponding to image data collected by the vehicle forward looking camera.

At step S5: the current frame of lane line point cloud and the body posture corresponding to the current frame of lane line point cloud are stored into a point cloud queue with a fixed length, where the point cloud queue includes a plurality of historical frames of lane line point clouds and body postures corresponding to the plurality of historical frames of lane line point clouds.

In this embodiment, after the body posture corresponding to the current frame of lane line point cloud is obtained, the current frame of lane line point cloud and the body posture corresponding to the current frame of lane line point cloud may be stored into the point cloud queue with a fixed length. In this embodiment, the point clouds correspond to a circular queue with a fixed length, and the point cloud queue includes a plurality of historical frames of lane line point clouds and body postures corresponding to the plurality of historical frames of lane line point clouds. Specifically, the latest frame of lane line point cloud and the corresponding body posture may be interpolated into a tail of the point cloud queue each time, that is, the current frame of lane line point cloud and the body posture corresponding to the current frame of lane line point cloud are stored into the tail of the point cloud queue. The fixed length in this embodiment is the number of frames freely set in advance for lane line point cloud splicing. The fixed length of the point cloud queue may be set according to project requirements, such as 20, 30, or 40. A specific value of the fixed length is not limited in this embodiment.

At step S6: all lane line point clouds in the point cloud queue are spliced to obtain a multi-frame lane line splicing point cloud.

In this embodiment, after the current frame of lane line point cloud and the corresponding body posture are stored into the point cloud queue, all the lane line point clouds in the point cloud queue may be spliced through the body postures in the point cloud queue to obtain the multi-frame lane line splicing point cloud. That is, the current frame of lane line point cloud in the point cloud queue is spliced with a plurality of continuous historical frames of lane line point clouds prior to the current frame of lane line point cloud in the point cloud queue, and the plurality of continuous frames of lane line point clouds are spliced into the body coordinate system of the current frame of lane line point cloud to obtain the multi-frame lane line splicing point cloud, so as to achieve the purpose of enriching lane line point cloud information.

In this embodiment, the body posture corresponding to each frame of integrated inertial navigation data obtained by track calculation and the first timestamp corresponding to the body posture are stored into the posture container, the body posture corresponding to the current frame of lane line point cloud is determined through the posture difference according to the second timestamp corresponding to the current frame of lane line point cloud and the posture container after the current frame of lane line point cloud is obtained, the current frame of lane line point cloud and the corresponding body posture are stored into the point cloud queue with a fixed length, and all the lane line point clouds in the point cloud queue are spliced, that is, the plurality of continuous historical frames of lane line point clouds are spliced to the current frame, to form the multi-frame lane line splicing point cloud. This embodiment reduces the weight of a single frame of point cloud with poor quality through historical frames of point cloud data to form a long enough lane line with reliable precision, thereby reducing the probability of deviation of a vehicle position from a true position due to mismatching.

After high-speed driving tests, the multi-frame lane line splicing point cloud obtained by the method in this embodiment can maintain stability and high precision at both straights and bends. Due to the use of historical frames of information, although the quality of a frame of point cloud is poor, its proportion is 1/fixed length of the total, so the impact on matching precision is greatly weakened. That is, the effect of matching by the multi-frame lane line point cloud obtained in this embodiment is much better than that of matching by a single frame of lane line point cloud.

By combining the above embodiments, in an implementation, the embodiments of the present disclosure further provide a lane line point cloud splicing method. In this method, the integrated inertial navigation data at least include a speed and an angular acceleration; and the "track calculation is performed on the each frame of integrated inertial navigation data to determine a body posture corresponding to the each frame of integrated inertial navigation data" in step S3 may include step S31: At step S31: the body posture corresponding to the current frame of integrated inertial navigation data is determined according to the speed and angular acceleration in the previous frame of integrated inertial navigation data, a time interval between two frames of integrated inertial navigation data, and a vehicle displacement and rotation matrix corresponding to the previous frame of integrated inertial navigation data.

In this embodiment, it may be assumed that the vehicle maintains a uniform motion within the time interval between the two frames of integrated inertial navigation data. For example, assuming that the frequency of the vehicle integrated inertial navigation system is 100 Hz, the time interval between the two frames of integrated inertial navigation data is 10 ms, and the vehicle maintains a uniform motion within the time interval of 10 ms. In this embodiment, the accurate speed of the vehicle may be obtained in real time through an acceleration and angular velocity measured by an inertial measurement unit in the vehicle integrated inertial navigation system and wheel speed pulse signals of the vehicle, so as to obtain a position and posture of the body corresponding to each frame of integrated inertial navigation data by track calculation. Specifically, the integrated inertial navigation data obtained in this embodiment includes at least the current speed and angular acceleration of the vehicle. Then, when the body posture corresponding to each frame of integrated inertial navigation data is determined, the body posture corresponding to the current frame of integrated inertial navigation data may be determined according to the speed and angular acceleration in the previous frame of integrated inertial navigation data, the time interval between the two frames of integrated inertial navigation data, and the vehicle displacement and rotation matrix corresponding to the previous frame of integrated inertial navigation data.

In an optional embodiment, the body posture corresponding to the current frame of integrated inertial navigation data may be obtained in step S31 through a first formula, a second formula, and a third formula:

The first formula:

$$p_n = p_{n-1} + R_{n-1} \cdot v_{n-1} \cdot \Delta t$$

The second formula:

$$R_n = R_{n-1} \cdot \dot{\omega}_{n-1} \cdot \Delta t$$

The third formula:

$$T_n = \begin{bmatrix} R_n & p_n^T \\ 0^T & 1 \end{bmatrix}$$

Where $p_{n-1}$ and $p_n$ respectively represent vehicle displacements corresponding to the previous frame of integrated inertial navigation data and the current frame of integrated inertial navigation data, $R_{n-1}$ and $R_n$ respectively represent rotation matrices corresponding to the previous frame of integrated inertial navigation data and the current frame of integrated inertial navigation data, $v_{n-1}$ represents the speed in the previous frame of integrated inertial navigation data, $\Delta t$ represents the time interval between two frames of integrated inertial navigation data, $\dot{\omega}_{n-1}$ represents the angular acceleration in the previous frame of integrated inertial navigation data, and $T_n$ represents the body posture corresponding to the current frame of integrated inertial navigation data.

In this embodiment, the body posture at the starting time may be set as an identity matrix, track calculation is performed on the integrated inertial navigation data from the starting point through the above first formula and second formula, and a translation variation and a rotation variation between frames are computed using the speed and angular acceleration at the previous time, so as to calculate the posture at the current time through the above third formula, namely, the body posture corresponding to the current frame of integrated inertial navigation data.

By combining the above embodiments, in an implementation, the embodiments of the present disclosure further provide a lane line point cloud splicing method. In this method, step S4 above may specifically include steps S41 to S43:

At step S41: first timestamps corresponding to two consecutive frames of integrated inertial navigation data adjacent to the second timestamp and body postures corresponding to the first timestamps corresponding to the two consecutive frames of integrated inertial navigation data respectively are determined in the posture container according to the second timestamp corresponding to the current frame of lane line point cloud.

In this embodiment, due to the inconsistency between the working frequency of the integrated inertial navigation system and the working frequency of the forward looking camera, the sampling timestamp of any frame of integrated inertial navigation data and lane line point cloud is different. In order to obtain the body posture corresponding to the current frame of lane line point cloud, under the assumption that the vehicle moves at a constant speed within the time interval between two frames of integrated inertial navigation data, the body posture obtained by the track calculation may be linearly interpolated, so as to obtain a body posture corresponding to a lane line point cloud between two consecutive frames of integrated inertial navigation data, that is, the body posture corresponding to the current frame of lane line point cloud.

In this embodiment, the first timestamps corresponding to the two consecutive frames of integrated inertial navigation data adjacent to the second timestamp corresponding to the current frame of lane line point cloud need to be first found in the posture container according to the second timestamp corresponding to the current frame of lane line point cloud; and the body postures corresponding to the first timestamps corresponding to the two consecutive frames of integrated inertial navigation data adjacent to the second timestamp corresponding to the current frame of lane line point cloud are found in the posture container.

At step S42: a compensation factor is determined according to the second timestamp corresponding to the current frame of lane line point cloud and the first timestamps corresponding to the two consecutive frames of integrated inertial navigation data.

In this embodiment, after the first timestamps corresponding to the two consecutive frames of integrated inertial navigation data adjacent to the second timestamp corresponding to the current frame of lane line point cloud are obtained, the compensation factor representing a timestamp ratio or scale may be determined according to the second timestamp corresponding to the current frame of lane line point cloud and the first timestamps adjacent thereto corresponding to the two consecutive frames of integrated inertial navigation data.

In an optional embodiment, the compensation factor may be determined in step S42 through a fourth formula;
The fourth formula:

$$ s = \left(t_{next} - t_c\right) / \left(t_{next} - t_{prev}\right) $$

Where s represents the compensation factor, $t_{prev}$ and $t_{next}$ respectively represent the first timestamps corresponding to the two consecutive frames of integrated inertial navigation data adjacent to the second timestamp corresponding to the current frame of lane line point cloud, and $t_c$ represents the second timestamp corresponding to the current frame of lane line point cloud.

At step S43: the body posture corresponding to the current frame of lane line point cloud is determined according to the compensation factor and the body postures corresponding to the first timestamps corresponding to the two consecutive frames of integrated inertial navigation data.

In this embodiment, after the compensation factor is determined, the body posture corresponding to the current frame of lane line point cloud may be determined according to the compensation factor and the body postures, found in the posture container, corresponding to the body postures corresponding to the first timestamps corresponding to the two consecutive frames of integrated inertial navigation data adjacent to the second timestamp corresponding to the current lane line point cloud.

In an optional embodiment, the body posture corresponding to the current frame of lane line point cloud may be determined in step S43 through a fifth formula, a sixth formula, and a seventh formula:

The fifth formula:

$$ p_c = p_{prev} \cdot s + p_{next} \cdot (1 - s) $$

The sixth formula:

$$ R_c = R_{next} \cdot R_{prev} \cdot s $$

The seventh formula:

$$ T_c = \begin{bmatrix} R_c & p_c^T \\ 0^T & 1 \end{bmatrix} $$

Where s represents the compensation factor, $p_{prev}$ and $p_{next}$ respectively represent vehicle displacements in the body postures corresponding to the first timestamps corresponding to the two consecutive frames of integrated inertial navigation data, $p_c$ represents a vehicle displacement corresponding to the current frame of lane line point cloud, $R_{prev}$ and $R_{next}$ respectively represent rotation matrices in the body postures corresponding to the first timestamps corresponding to the two consecutive frames of integrated inertial navigation data, $R_c$ represents a rotation matrix corresponding to the current frame of lane line point cloud, and $T_c$ represents the body posture corresponding to the current frame of lane line point cloud.

That is, in this embodiment, the timestamps $t_{prev}$ and $t_{next}$ of the two consecutive frames of integrated inertial navigation data adjacent thereto and the postures $\textbf{\textit{p}}_{prev}, \textbf{\textit{R}}_{prev}$ and $\textbf{\textit{p}}_{next}, \textbf{\textit{R}}_{next}$ may be first found in the posture container according to the timestamp $t_c$ corresponding to the current lane line point cloud; and then the linear interpolation is completed through the fourth formula to the seventh formula to obtain the body posture corresponding to the current frame of lane line point cloud, thereby obtaining the body posture corresponding to each frame of lane line point cloud.

By combining the above embodiments, in an implementation, the embodiments of the present disclosure further provide a lane line point cloud splicing method. In this method, step S6 above may specifically include steps S61 and S62:

At step S61: a matrix operation is performed on the body posture corresponding to each frame of other lane line point cloud in the point cloud queue and an inverse of the body posture corresponding to the current frame of lane line point cloud, to obtain a coordinate system transformation relationship between the each frame of other lane line point cloud and the current frame of lane line point cloud.

In this embodiment, since the point cloud queue is a circular queue with a fixed length, after the current frame of lane line point cloud and the body posture corresponding to the current frame of lane line point cloud are interpolated into the tail of the queue, the historical frame of lane line point cloud and the corresponding body posture at the original head of the point cloud queue leave the point cloud queue, thereby ensuring the fixed length of the point cloud queue. After the current frame of lane line point cloud and the body posture corresponding to the current frame of lane line point cloud are interpolated into the tail of the point cloud queue to obtain a new point cloud queue, the matrix operation may be performed on the body posture corresponding to each frame of other lane line point cloud in the point cloud queue and the inverse of the body posture corresponding to the current frame of lane line point cloud at the tail of the point cloud queue, to obtain the coordinate system transformation relationship between the each frame of other lane line point cloud and the current frame of lane line point cloud. The other lane line point cloud in this embodiment is a lane line point cloud in the point cloud queue except the current frame of lane line point cloud.

For example, all lane line point clouds and corresponding body postures in the point cloud queue may be traversed. For each frame in the other lane line point clouds, after one frame of other lane line point cloud and the corresponding body posture are extracted each time, the matrix operation is performed on the body posture corresponding to the frame of other lane line point cloud and the inverse of the body posture corresponding to the current frame of lane line point cloud, to obtain a transformation relationship between the two frames of body coordinate systems, namely, obtain the coordinate system transformation relationship between the frame of other lane line point cloud and the current frame of lane line point cloud. Specifically, the coordinate system transformation relationship may be obtained through an eighth formula:

The eighth formula:

$$T_n^{current} = (T_{current})^{-1} \cdot T_n$$

Where $T_{current}$ represents the body posture corresponding to the current frame of lane line point cloud, $T_n$ represents the body posture corresponding to the n-th frame of other lane line point cloud, $T_n^{current}$ represents the coordinate system transformation relationship between the n-th frame of other lane line point cloud and the current frame of lane line point cloud, that is, a posture transformation matrix from the n-th frame to the current frame.

At step S62: the each frame of other lane line point cloud is projected to a body coordinate system of the current frame of lane line point cloud through the corresponding coordinate system transformation relationship, to obtain the multi-frame lane line splicing point cloud under the body coordinate system of the current frame of lane line point cloud.

In this embodiment, after the coordinate system transformation relationship between the each frame of other lane line point cloud and the current frame of lane line point cloud is obtained, the each frame of other lane line point cloud may be projected to the body coordinate system of the current frame of lane line point cloud through the corresponding coordinate system transformation relationship, so as to obtain the multi-frame lane line splicing point cloud under the body coordinate system of the current frame of lane line point cloud, and to complete the splicing of a multi-frame lane line point cloud. In this embodiment, a projection transformation of coordinate systems between the two may be performed after each coordinate system transformation relationship is obtained; or projection transformations of respective corresponding coordinate systems may be unified after all coordinate system transformation relationships in the point cloud queue are obtained. This embodiment does not impose any restrictions on this.

In this embodiment, after the coordinate system transformation relationship corresponding to each historical frame is determined through the body posture corresponding to the each historical frame of lane line point cloud and the inverse of the body posture corresponding to the current frame of lane line point cloud, and the each historical frame of lane line point cloud may be projected to the body coordinate system of the current frame of lane line point cloud through the corresponding coordinate system transformation relationship, so as to obtain a new lane line point cloud under the body coordinate system of the current frame of lane line point cloud, that is, point cloud splicing of multiple frames of lane lines is completed.

In an embodiment, as shown in Fig. 6, Fig. 6 is a splicing effect diagram of a multi-frame lane line point cloud according to an embodiment of the present disclosure. In Fig. 6, the black represents a single-frame lane line point cloud at the current time, and the white represents a spliced multi-frame lane line point cloud, showing that the weight of a single frame of point cloud with poor quality is reduced through historical frames of point cloud data to form a long enough lane line with reliable precision, thereby reducing the probability of deviation of a vehicle position from a true position due to mismatching.

By combining the above embodiments, in an implementation, the embodiments of the present disclosure further provide a lane line point cloud splicing method. After step S4 above, the method may further include step S4.5:

At step S4.5: timestamps prior to the second timestamp corresponding to the current frame of lane line point cloud and body postures corresponding to the timestamps in the posture container are deleted.

In this embodiment, since the body posture data and corresponding first timestamp data in the posture container are increasing, the size of the posture container continues to increase, which will reduce the search speed in the posture container and thus affect the efficiency of the lane line point cloud splicing method provided in this embodiment. Therefore, in this embodiment, in order to maintain the size of the posture container within a reasonable and as small range as possible, after each posture difference is completed to obtain the body posture corresponding to the current frame of lane line point cloud, the data prior to the second timestamp corresponding to the current frame of lane line point cloud corresponding to the posture difference in the posture container are deleted. That is, the timestamps prior to the second timestamp corresponding to the current frame of lane line point cloud in the posture container are deleted, and the body postures corresponding to the timestamps prior to the second timestamp corresponding to the current frame of lane line point cloud in the posture container are deleted.

By combining the above embodiments, in an implementation, the embodiments of the present disclosure further provide a lane line point cloud splicing method. Besides the above steps, the method may further include step S7:

At step S7: the multi-frame lane line splicing point cloud is rasterized and down-sampled to obtain a down-sampled multi-frame lane line splicing point cloud.

In this embodiment, after the splicing of the multi-frame lane line point cloud is completed, the number of point clouds is very large, which will increase computational resources and time consumption and affect the operational efficiency of an algorithm. The more points indicate slower projection splicing, and the calculation speed will also decrease with the increase of the number of point clouds during subsequent iterations of nearest point matching and back-end posture optimization. Therefore, in this embodiment, the spliced multi-frame lane line splicing point cloud needs to be rasterized to achieve down-sampling, so as to obtain the down-sampled multi-frame lane line splicing point cloud.

In an optional implementation, step S7 above may specifically include steps S71 and S72:

At step S71: the multi-frame lane line splicing point cloud is rasterized to obtain a plurality of grids.

In this embodiment, the projected multi-frame lane line splicing point cloud may be represented by an occupied grid map in a two-dimensional plane, that is, the multi-frame lane line splicing point cloud is rasterized to obtain the plurality of grids. In this embodiment, the area of each grid may be set, for example, the area occupied by each grid may be 0.1 m×0.1 m. This embodiment does not limit a specific value of the area occupied by each grid.

At step S72: all point clouds in each of the plurality of grids are down-sampled respectively to obtain a single target point cloud of each grid, and the down-sampled multi-frame lane line splicing point cloud is determined according to the single target point cloud of each grid.

In this embodiment, after the plurality of grids are obtained by rasterizing, all point clouds in each of the plurality of grids may be down-sampled respectively to obtain a single target point cloud of each grid, and the down-sampled multi-frame lane line splicing point cloud is determined according to the single target point cloud in each of the plurality of grids.

For example, coordinates (x, y) of all point clouds within each grid, that is, all points within each grid, may be multiplied by 10, rounded, and then multiplied by 0.1, so that all the point clouds within each grid are down-sampled to a single target point cloud. Since there is only one target point cloud within each grid, it is a single target point cloud of each grid. Specifically, the single target point cloud in each grid may be obtained through a ninth formula:

The ninth formula: $(x, y)' = \left\lfloor \frac{(x,y)}{0.1} \right\rfloor * 0.1$, where $(x,y)'$ represents the single target point cloud of the grid, and (x, y) represents the coordinates of all point clouds within the grid.

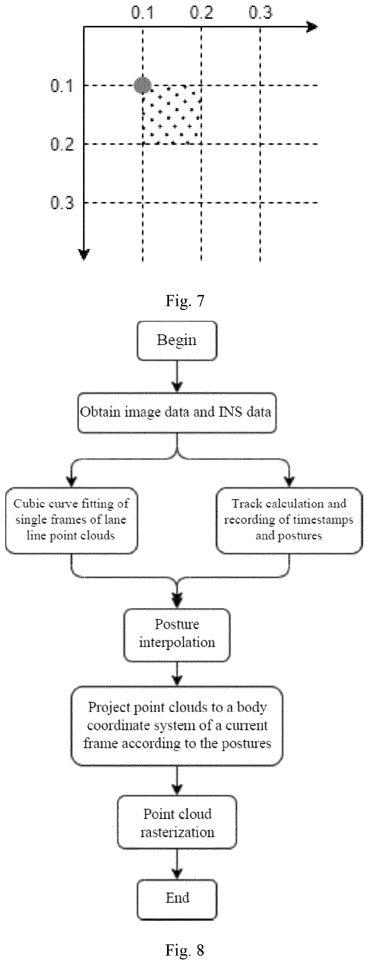

In one embodiment, as shown in Fig. 7, Fig. 7 is a schematic diagram of rasterization of a lane line point cloud according to an embodiment of the present disclosure. In Fig. 7, the area occupied by each grid is 0.1 m×0.1 m, and a vertex at the upper left corner of the grid is selected by down-sampling to represent all point clouds within the grid, where the point at the upper left corner of the grid in Fig. 7 is the single target point cloud of the grid.

By combining the above embodiments, in an implementation, the embodiments of the present disclosure further provide a lane line point cloud splicing method. In this method, step S1 above may specifically include steps S11 and S12:

At step S11: each frame of lane line point cloud data output by a vehicle forward looking camera is obtained in real time, where the lane line point cloud data at least include: an initial lane line point cloud, a lane line starting point, and a lane line length.

In this embodiment, the vehicle forward looking camera provides the lane line point cloud in real time and may further provide information about the lane line starting point *start_x* and the lane line length *line_range* at the same time. That is, in this embodiment, each frame of lane line point cloud data output by the vehicle forward looking camera may be obtained in real time, where the lane line point cloud data at least include: an initial lane line point cloud, a lane line starting point, and a lane line length. That is, each frame of lane line point cloud data obtained in this embodiment at least includes: each frame of initial lane line point cloud, a lane line starting point of each frame of lane line, and a lane line length of each frame of lane line.

At step S12: a lane line point cloud segment of a preset distance is selected from the initial lane line point cloud according to the lane line starting point and the lane line length, and the lane line point cloud segment of the preset distance is used as the each frame of lane line point cloud.

It can be seen from the above that each frame of lane line point cloud output by the vehicle forward looking camera currently has poor precision at a near end and a far end, and only the middle segment has good precision. In order to achieve positioning with higher precision, in this embodiment, after each frame of lane line point cloud data is obtained, the lane line point cloud segment of the preset distance may be selected from the frame of initial lane line point cloud according to the lane line starting point and the lane line length in the frame of initial lane line point cloud data and the preset distance, and the lane line point cloud segment of the preset distance is used as the each frame of lane line point cloud for subsequent splicing of single frames of lane line point clouds.

In this embodiment, the preset distance may be a distance segment arbitrarily set according to the demand from the lane line starting point. For example, the preset distance may be 5-10 m, where 5 m represents 5 m from a starting point of the preset distance to the lane line starting point, and 10 m represents 10 m from an ending point of the preset distance to the lane line starting point. This embodiment does not limit a specific range of the preset distance. It should be noted that the ending point of the preset distance is generally less than the lane line length. When the ending point of the preset distance is greater than the lane line length, the lane line point cloud segment of the preset distance includes all lane line point cloud segments behind the starting point of the preset distance in the initial lane line point cloud.

In an optional implementation, after the lane line point cloud segment of the preset distance is obtained, one point cloud may be selected at each fixed distance interval (for example, the fixed distance interval may be 0.5 m, which is not limited in this embodiment) within the lane line point cloud segment of the preset distance, so as to obtain the each frame of lane line point cloud for subsequent splicing of lane line point clouds.

In another embodiment, as shown in Fig. 8, Fig. 8 is a schematic flowchart of a lane line point cloud splicing method according to an embodiment of the present disclosure.

In Fig. 8, the method begins: first, image data and INS data are obtained in real time, where the image data are information related to a lane line provided by the vehicle forward looking camera after semantic segmentation, that is, each frame of lane line point cloud is obtained in real time. The INS data are integrated inertial navigation data, that is, each frame of integrated inertial navigation data is obtained in real time. The INS data and the image data need to be timed based on the same clock source to ensure time synchronization.

Second, single frames of lane line point clouds are obtained by cubic curve fitting, track calculation is performed according to the INS data to obtain a body posture corresponding to each frame of integrated inertial navigation data, and the body posture corresponding to each frame of integrated inertial navigation data and a corresponding timestamp are stored in a posture container. The steps "cubic curve fitting of single frames of lane line point clouds" and "track calculation and recording of timestamps and postures" may be executed simultaneously or sequentially, which is not limited.

Next, a body posture corresponding to the current frame of lane line point cloud is obtained through a posture difference: due to the inconsistency between the working frequency of the INS and the camera, the sampling timestamp of any frame of INS data and image data is different. In order to obtain the corresponding body posture when the image data are sampled, under the assumption of uniform motion (the frequency of integrated inertial navigation is 100 Hz, so it is considered that the vehicle moves at a constant speed within 10 ms), the body posture obtained by the track calculation is linearly interpolated, so as to obtain a body posture corresponding to a lane line point cloud between two consecutive frames of integrated inertial navigation data (namely, the body posture corresponding to the current frame of lane line point cloud).

After the body posture corresponding to the current frame of lane line point cloud is obtained, the single frame of lane line point cloud (namely, the current frame of lane line point cloud) along with the corresponding body posture may be stored into a circular queue with a fixed length. The latest frame of lane line point cloud and corresponding body posture are interpolated into a tail of the circular queue each time, where the circular queue is a point cloud queue used for splicing historical frames of lane line point clouds.

Then, the historical frames of lane line point clouds in the circular queue are projected to a body coordinate system of the current frame of lane line point cloud according to the body posture: all lane line point cloud data in the circular queue may be traversed, one frame of lane line point cloud and its corresponding posture are extracted each time, then a matrix operation is performed on the body posture corresponding to the frame of lane line point cloud and an inverse of the body posture corresponding to the current frame of lane line point cloud to obtain a transformation relationship between two coordinate systems, and the frame of lane line point cloud may be projected to the body coordinate system of the current frame of lane line point cloud through the transformation relationship. Similarly, other frames of lane line point clouds are sequentially projected to the body coordinate system of the current frame of lane line point cloud by the method, to obtain new lane line point clouds located in the coordinate system of the current frame, that is, point cloud splicing of multiple frames of lane lines is completed.

Finally, the multi-frame lane line splicing point cloud obtained by the splicing is rasterized and down-sampled. After the splicing of the multi-frame lane line point cloud is completed, the number of points is very large, which will increase computational resources and time consumption and affect the efficiency of the algorithm. The more points indicate slower projection splicing, and the calculation speed will also decrease with the increase of the number of point clouds during subsequent iterations of nearest point matching and back-end posture optimization. Therefore, the spliced multi-frame lane line splicing point cloud needs to be rasterized to achieve down-sampling. Specifically, the projected splicing point cloud may be represented by an occupied grid map in a two-dimensional plane, where the area occupied by each grid is 0.1 m×0.1 m. Coordinates (x, y) of all points within each grid are multiplied by 10, rounded, and then multiplied by 0.1. As a result, the point cloud within the grid is down-sampled to a point, to achieve down-sampling. The method ends.

According to the lane line point cloud splicing method provided in this embodiment, position and posture changes of a vehicle in a three-dimensional space are calculated by a vehicle integrated inertial navigation system, lane line information is obtained by a vehicle camera, then linear interpolation of postures is completed using image timestamps to obtain a vehicle posture corresponding to each frame of lane line, and finally, historical frames of lane line point clouds are projected to the current frame, so as to complete the splicing. That is, a plurality of consecutive single frames of lane lines are accumulated, and historical frames of lane lines are spliced to the current frame by projection transformation. Therefore, the weight of a single frame of point cloud with poor quality is reduced through historical frames of point cloud data to form a long enough lane line with reliable precision, thereby reducing the probability of deviation of a vehicle position from a true position due to mismatching.

It should be noted that, for ease of description, the method embodiments are described as a combination of a series of operations; however, those skilled in the art should learn that the embodiments of the present disclosure are not limited by the described sequence of operations, because some steps may be performed in another sequence or simultaneously according to the embodiments of the present disclosure. Second, those skilled in the art should also learn that the embodiments described in the specification are all preferred embodiments, and the involved operations may not be necessary for the embodiments of the present disclosure.

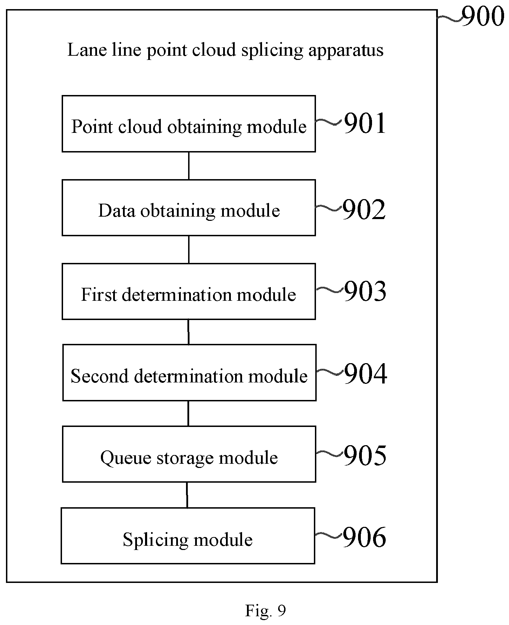

Based on the same inventive concept, an embodiment of the present disclosure provides a lane line point cloud splicing apparatus 900. Refer to Fig. 9. Fig. 9 is a structural block diagram of a lane line point cloud splicing apparatus according to an embodiment of the present disclosure. As shown in Fig. 9, the apparatus 900 includes:

a point cloud obtaining module 901, configured to obtain each frame of lane line point cloud in real time;

a data obtaining module 902, configured to obtain each frame of integrated inertial navigation data in real time;

a first determination module 903, configured to perform track calculation on the each frame of integrated inertial navigation data to determine a body posture corresponding to the each frame of integrated inertial navigation data, and store the body posture corresponding to the each frame of integrated inertial navigation data and a corresponding first timestamp into a posture container;

a second determination module 904, configured to determine a body posture corresponding to the current frame of lane line point cloud through a posture difference according to a second timestamp corresponding to the current frame of lane line point cloud and the posture container;

a queue storage module 905, configured to store the current frame of lane line point cloud and the body posture corresponding to the current frame of lane line point cloud into a point cloud queue with a fixed length, where the point cloud queue includes a plurality of historical frames of lane line point clouds and body postures corresponding to the plurality of historical frames of lane line point clouds; and

a splicing module 906, configured to splice all lane line point clouds in the point cloud queue to obtain a multi-frame lane line splicing point cloud.

Optionally, the integrated inertial navigation data at least include a speed and an angular acceleration; and the first determination module 903 includes:
a first determination submodule, configured to determine the body posture corresponding to the current frame of integrated inertial navigation data according to the speed and angular acceleration in the previous frame of integrated inertial navigation data, a time interval between two frames of integrated inertial navigation data, and a vehicle displacement and rotation matrix corresponding to the previous frame of integrated inertial navigation data.

Optionally, the first determination submodule includes:
a first body posture determination submodule, configured to obtain the body posture corresponding to the current frame of integrated inertial navigation data through a first formula, a second formula, and a third formula:

The first formula:

$$p_n = p_{n-1} + R_{n-1} \cdot v_{n-1} \cdot \Delta t$$

The second formula:

$$R_n = R_{n-1} \cdot \dot{\omega}_{n-1} \cdot \Delta t$$

The third formula:

$$T_n = \begin{bmatrix} R_n & p_n^T \\ 0^T & 1 \end{bmatrix}$$

Where $p_{n-1}$ and $p_n$ respectively represent vehicle displacements corresponding to the previous frame of integrated inertial navigation data and the current frame of integrated inertial navigation data, $R_{n-1}$ and $R_n$ respectively represent rotation matrices corresponding to the previous frame of integrated inertial navigation data and the current frame of integrated inertial navigation data, $v_{n-1}$ represents the speed in the previous frame of integrated inertial navigation data, $\Delta t$ represents the time interval between two frames of integrated inertial navigation data, $\dot{\omega}_{n-1}$ represents the angular acceleration in the previous frame of integrated inertial navigation data, and $T_n$ represents the body posture corresponding to the current frame of integrated inertial navigation data.

Optionally, the second determination module 904 includes:

a timestamp determination submodule, configured to determine, in the posture container, first timestamps corresponding to two consecutive frames of integrated inertial navigation data adjacent to the second timestamp and body postures corresponding to the first timestamps corresponding to the two consecutive frames of integrated inertial navigation data respectively according to the second timestamp corresponding to the current frame of lane line point cloud;

a factor determination submodule, configured to determine a compensation factor according to the second timestamp corresponding to the current frame of lane line point cloud and the first timestamps corresponding to the two consecutive frames of integrated inertial navigation data; and

a second body posture determination submodule, configured to determine the body posture corresponding to the current frame of lane line point cloud according to the compensation factor and the body postures corresponding to the first timestamps corresponding to the two consecutive frames of integrated inertial navigation data.

Optionally, the factor determination submodule includes:
a compensation factor determination submodule, configured to determine the compensation factor through a fourth formula:

The fourth formula:

$$s = (t_{next} - t_c) / (t_{next} - t_{prev})$$

The second body posture determination submodule includes:
a third body posture determination submodule, configured to obtain the body posture corresponding to the current frame of lane line point cloud through a fifth formula, a sixth formula, and a seventh formula:

The fifth formula:

$$p_c = p_{prev} \cdot s + p_{next} \cdot (1 - s)$$

The sixth formula:

$$R_c = R_{next} \cdot R_{prev} \cdot s$$

The seventh formula:

$$T_c = \begin{bmatrix} R_c & p_c^T \\ 0^T & 1 \end{bmatrix}$$

Where s represents the compensation factor, $t_{prev}$ and $t_{next}$ respectively represent the first timestamps corresponding to the two consecutive frames of integrated inertial navigation data adjacent to the second timestamp, $t_c$ represents the second timestamp corresponding to the current frame of lane line point cloud, $p_{prev}$ and $p_{next}$ respectively represent vehicle displacements in the body postures corresponding to the first timestamps corresponding to the two consecutive frames of integrated inertial navigation data, $p_c$ represents a vehicle displacement corresponding to the current frame of lane line point cloud, $R_{prev}$ and $R_{next}$ respectively represent rotation matrices in the body postures corresponding to the first timestamps corresponding to the two consecutive frames of integrated inertial navigation data, $R_c$ represents a rotation matrix corresponding to the current frame of lane line point cloud, and $T_c$ represents the body posture corresponding to the current frame of lane line point cloud.

Optionally, the splicing module 906 includes:

a transformation relationship determination submodule, configured to perform a matrix operation on the body posture corresponding to each frame of other lane line point cloud in the point cloud queue and an inverse of the body posture corresponding to the current frame of lane line point cloud, to obtain a coordinate system transformation relationship between the each frame of other lane line point cloud and the current frame of lane line point cloud, where the other lane line point cloud is a lane line point cloud in the point cloud queue except the current frame of lane line point cloud; and

a splicing submodule, configured to project the each frame of other lane line point cloud to a body coordinate system of the current frame of lane line point cloud through the corresponding coordinate system transformation relationship, to obtain the multi-frame lane line splicing point cloud under the body coordinate system of the current frame of lane line point cloud.

Optionally, the apparatus 900 further includes: a deletion module, configured to delete timestamps prior to the second timestamp corresponding to the current frame of lane line point cloud and body postures corresponding to the timestamps in the posture container after the body posture corresponding to the current frame of lane line point cloud is determined through the posture difference according to the second timestamp corresponding to the current frame of lane line point cloud and the posture container.

Optionally, the apparatus 900 further includes: a down-sampling processing module, configured to rasterize and down-sample the multi-frame lane line splicing point cloud to obtain a down-sampled multi-frame lane line splicing point cloud.

Optionally, the down-sampling processing module includes:

a rasterization submodule, configured to rasterize the multi-frame lane line splicing point cloud to obtain a plurality of grids; and

a down-sampling processing submodule, configured to down-sample all point clouds in each of the plurality of grids respectively to obtain a single target point cloud of each grid, and determine the down-sampled multi-frame lane line splicing point cloud according to the single target point cloud of each grid.

Optionally, the point cloud obtaining module 901 includes:

a data obtaining submodule, configured to obtain each frame of lane line point cloud data output by a vehicle forward looking camera in real time, where the lane line point cloud data at least include: an initial lane line point cloud, a lane line starting point, and a lane line length; and

a selection submodule, configured to select a lane line point cloud segment of a preset distance from the initial lane line point cloud according to the lane line starting point and the lane line length, and use the lane line point cloud segment of the preset distance as the each frame of lane line point cloud.

Based on the same inventive concept, another embodiment of the present disclosure provides a computer-readable storage medium. The computer-readable storage medium stores a computer program. When the computer program is executed by a processor, the steps in the lane line point cloud splicing method as described in any of the foregoing embodiments of the present disclosure are implemented.

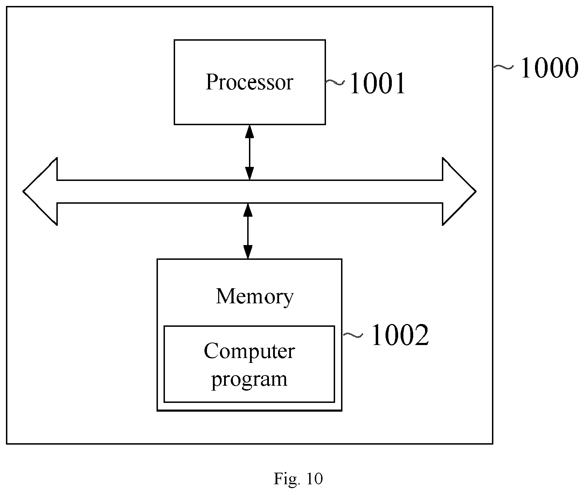

Based on the same inventive concept, another embodiment of the present disclosure provides an electronic device 1000, as shown in Fig. 10. Fig. 10 is a schematic diagram of an electronic device according to an embodiment of the present disclosure. The electronic device includes a memory 1002, a processor 1001, and a computer program stored in the memory and executable on the processor. When the processor executes the computer program, the steps in the lane line point cloud splicing method described in any of the foregoing embodiments of the present disclosure are implemented.

Based on the same inventive concept, another embodiment of the present disclosure provides a vehicle. The vehicle includes a positioning system, and the positioning system is configured to perform the steps in the lane line point cloud splicing method as described in any of the foregoing embodiments of the present disclosure.

The apparatus embodiment is substantially similar to the method embodiment, and therefore is described briefly. For related information, refer to descriptions of the related parts in the method embodiment.

The embodiments in the specification are all described in a progressive manner. Each embodiment focuses on the differences from other embodiments, and the same or similar parts between the embodiments may be referred to each other.

Those skilled in the art should understand that the embodiments of the present disclosure may be provided as methods, apparatuses, or computer program products. Therefore, the embodiments of the present disclosure may be in a form of full hardware embodiments, full software embodiments, or embodiments combining software and hardware. In addition, the embodiments of the present disclosure may be in a form of a computer program product implemented on one or more computer available storage media (including but not limited to a disk memory, a CD-ROM, an optical memory, and the like) including computer available program codes.

The embodiments of the present disclosure are described with reference to the flowcharts and/or block diagrams of the methods, terminal devices (systems), and computer program products according to the embodiments of the present disclosure. It should be understood that computer program instructions may be used to implement each process and/or block in the flowcharts and/or block diagrams, or a combination of processes and/or blocks in the flowcharts and/or block diagrams. The computer program instructions may be provided to a general-purpose computer, a dedicated computer, an embedded processor, or a processor of any other programmable data processing terminal device to generate a machine, so that the instructions executed by a computer or a processor of any other programmable data processing terminal device generate an apparatus for implementing a specific function in one or more processes in the flowcharts and/or in one or more blocks in the block diagrams.

The computer program instructions may be stored in a computer-readable memory that can instruct the computer or any other programmable data processing terminal device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto a computer or other programmable data processing terminal device, so that a series of operations and steps are performed on the computer or the other programmable terminal device, thereby generating computer-implemented processing, so that the instructions executed on the computer or the other programmable terminal device provide steps for implementing a specific function in one or more processes in the flowcharts and/or in one or more blocks in the block diagrams.

Although the preferred embodiments of the present disclosure are described, those skilled in the art can make changes and modifications to the embodiments once they learn the basic inventive concept. Therefore, the appended claims are intended to be interpreted as including the preferred embodiments and all the changes and modifications falling within the scope of the embodiments of the present disclosure.

Finally, it should be noted that in the specification, relational terms such as first and second are used only to differentiate an entity or operation from another entity or operation, and do not necessarily require or imply that any actual relationship or sequence exists between these entities or operations. Moreover, the terms "include", "comprise", or any other variants thereof are intended to cover a non-exclusive inclusion, so that a process, method, article, or terminal device that includes a series of elements not only includes those elements, but also includes other elements that are not expressly listed, or further includes elements inherent to such a process, method, article, or terminal device. In absence of more constraints, an element defined by the statement "include a..." does not exclude other identical elements in the process, method, article, or terminal device that includes the element.

The above details a lane line point cloud splicing method and apparatus, a device, a medium, and a vehicle provided by the present disclosure. Specific examples are used herein to illustrate the principles and implementations of the present disclosure. The description of the above embodiments is only used for helping understanding the method of the present disclosure and the core idea thereof. Meanwhile, changes may be made to the specific implementations and the application scope according to the idea of the present disclosure for those of ordinary skill in the art. To sum up, the content of the specification should not be understood as limitations to the present disclosure.

**Claims**

1. A lane line point cloud splicing method, comprising:

   obtaining each frame of lane line point cloud in real time;
   obtaining each frame of integrated inertial navigation data in real time;
   performing track calculation on the each frame of integrated inertial navigation data to determine a body posture corresponding to the each frame of integrated inertial navigation data, and storing the body posture corresponding to the each frame of integrated inertial navigation data and a corresponding first timestamp into a posture container;
   determining a body posture corresponding to the current frame of lane line point cloud through a posture difference according to a second timestamp corresponding to the current frame of lane line point cloud and the posture container;
   storing the current frame of lane line point cloud and the body posture corresponding to the current frame of lane line point cloud into a point cloud queue with a fixed length, wherein the point cloud queue comprises a plurality of historical frames of lane line point clouds and body postures corresponding to the plurality of historical frames of lane line point clouds; and
   splicing all lane line point clouds in the point cloud queue to obtain a multi-frame lane line splicing point cloud.

2. The lane line point cloud splicing method according to claim 1, wherein the integrated inertial navigation data at least comprise a speed and an angular acceleration; and the performing track calculation on the each frame of integrated inertial navigation data to determine a body posture corresponding to the each frame of integrated inertial navigation data comprises:
   determining the body posture corresponding to the current frame of integrated inertial navigation data according to the speed and angular acceleration in the previous frame of integrated inertial navigation data, a time interval between two frames of integrated inertial navigation data, and a vehicle displacement and rotation matrix corresponding to the previous frame of integrated inertial navigation data.

3. The lane line point cloud splicing method according to claim 2, wherein the determining the body posture corresponding to the current frame of integrated inertial navigation data according to the speed and angular acceleration in the previous frame of integrated inertial navigation data, a time interval between two frames of integrated inertial navigation data, and a vehicle displacement and rotation matrix corresponding to the previous frame of integrated inertial navigation data comprises:
obtaining the body posture corresponding to the current frame of integrated inertial navigation data through a first formula, a second formula, and a third formula:

the first formula:

$$p_n = p_{n-1} + R_{n-1} \cdot v_{n-1} \cdot \Delta t$$

the second formula:

$$R_n = R_{n-1} \cdot \dot{\omega}_{n-1} \cdot \Delta t$$

the third formula:

$$T_n = \begin{bmatrix} R_n & p_n^T \\ 0^T & 1 \end{bmatrix}$$

wherein $p_{n-1}$ and $p_n$ respectively represent vehicle displacements corresponding to the previous frame of integrated inertial navigation data and the current frame of integrated inertial navigation data, $R_{n-1}$ and $R_n$ respectively represent rotation matrices corresponding to the previous frame of integrated inertial navigation data and the current frame of integrated inertial navigation data, $v_{n-1}$ represents the speed in the previous frame of integrated inertial navigation data, $\Delta t$ represents the time interval between two frames of integrated inertial navigation data, $\dot{\omega}_{n-1}$ represents the angular acceleration in the previous frame of integrated inertial navigation data, and $T_n$ represents the body posture corresponding to the current frame of integrated inertial navigation data.

4. The lane line point cloud splicing method according to claim 1, wherein the determining a body posture corresponding to the current frame of lane line point cloud through a posture difference according to a second timestamp corresponding to the current frame of lane line point cloud and the posture container comprises:

determining, in the posture container, first timestamps corresponding to two consecutive frames of integrated inertial navigation data adjacent to the second timestamp and body postures corresponding to the first timestamps corresponding to the two consecutive frames of integrated inertial navigation data respectively according to the second timestamp corresponding to the current frame of lane line point cloud;
determining a compensation factor according to the second timestamp corresponding to the current frame of lane line point cloud and the first timestamps corresponding to the two consecutive frames of integrated inertial navigation data; and
determining the body posture corresponding to the current frame of lane line point cloud according to the compensation factor and the body postures corresponding to the first timestamps corresponding to the two consecutive frames of integrated inertial navigation data.

5. The lane line point cloud splicing method according to claim 4, wherein the determining a compensation factor according to the second timestamp corresponding to the current frame of lane line point cloud and the first timestamps corresponding to the two consecutive frames of integrated inertial navigation data comprises:
determining the compensation factor through a fourth formula:

the fourth formula:

$$s = (t_{next} - t_c) / (t_{next} - t_{prev})$$

the determining the body posture corresponding to the current frame of lane line point cloud according to the compensation factor and the body postures corresponding to the first timestamps corresponding to the two consecutive frames of integrated inertial navigation data comprises:
obtaining the body posture corresponding to the current frame of lane line point cloud through a fifth formula, a sixth formula, and a seventh formula:

the fifth formula:

$$p_c = p_{prev} \cdot s + p_{next} \cdot (1 - s)$$

the sixth formula:

$$R_c = R_{next} \cdot R_{prev} \cdot s$$

the seventh formula:

$$T_c = \begin{bmatrix} R_c & p_c^T \\ 0^T & 1 \end{bmatrix}$$

wherein s represents the compensation factor, $t_{prev}$ and $t_{next}$ respectively represent the first timestamps corresponding to the two consecutive frames of integrated inertial navigation data adjacent to the second timestamp, $t_c$ represents the second timestamp corresponding to the current frame of lane line point cloud, $p_{prev}$ and $p_{next}$ respectively represent vehicle displacements in the body postures corresponding to the first timestamps corresponding to the two consecutive frames of integrated inertial navigation data, $p_c$ represents a vehicle displacement corresponding to the current frame of lane line point cloud, $R_{prev}$ and $R_{next}$ respectively represent rotation matrices in the body postures corresponding to the first timestamps corresponding to the two consecutive frames of integrated inertial navigation data, $R_c$ represents a rotation matrix corresponding to the current frame of lane line point cloud, and $T_c$ represents the body posture corresponding to the current frame of lane line point cloud.

6. The lane line point cloud splicing method according to claim 1, wherein the splicing all lane line point clouds in the point cloud queue to obtain a multi-frame lane line splicing point cloud comprises:

performing a matrix operation on the body posture corresponding to each frame of other lane line point cloud in the point cloud queue and an inverse of the body posture corresponding to the current frame of lane line point cloud, to obtain a coordinate system transformation relationship between the each frame of other lane line point cloud and the current frame of lane line point cloud, wherein the other lane line point cloud is a lane line point cloud in the point cloud queue except the current frame of lane line point cloud; and

projecting the each frame of other lane line point cloud to a body coordinate system of the current frame of lane line point cloud through the corresponding coordinate system transformation relationship, to obtain the multi-frame lane line splicing point cloud under the body coordinate system of the current frame of lane line point cloud.

7. The lane line point cloud splicing method according to claim 1, wherein after the determining a body posture corresponding to the current frame of lane line point cloud through a posture difference according to a second timestamp corresponding to the current frame of lane line point cloud and the posture container, the method further comprises:
deleting timestamps prior to the second timestamp corresponding to the current frame of lane line point cloud and body postures corresponding to the timestamps in the posture container.

8. The lane line point cloud splicing method according to claim 1, wherein the method further comprises:
rasterizing and down-sampling the multi-frame lane line splicing point cloud to obtain a down-sampled multi-frame lane line splicing point cloud.

9. The lane line point cloud splicing method according to claim 8, wherein the rasterizing and down-sampling the multi-frame lane line splicing point cloud to obtain a down-sampled multi-frame lane line splicing point cloud comprises:

rasterizing the multi-frame lane line splicing point cloud to obtain a plurality of grids; and
down-sampling all point clouds in each of the plurality of grids respectively to obtain a single target point cloud of each grid, and determining the down-sampled multi-frame lane line splicing point cloud according to the single target point cloud of each grid.

10. The lane line point cloud splicing method according to claim 1, wherein the obtaining each frame of lane line point cloud in real time comprises:

obtaining each frame of lane line point cloud data output by a vehicle forward looking camera in real time, wherein the lane line point cloud data at least comprise: an initial lane line point cloud, a lane line starting point, and a lane line length; and
selecting a lane line point cloud segment of a preset distance from the initial lane line point cloud according to the lane line starting point and the lane line length, and using the lane line point cloud segment of the preset distance as the each frame of lane line point cloud.

11. A lane line point cloud splicing apparatus, comprising:

a point cloud obtaining module, configured to obtain each frame of lane line point cloud in real time;

a data obtaining module, configured to obtain each frame of integrated inertial navigation data in real time;

a first determination module, configured to perform track calculation on the each frame of integrated inertial navigation data to determine a body posture corresponding to the each frame of integrated inertial navigation data, and store the body posture corresponding to the each frame of integrated inertial navigation data and a corresponding first timestamp into a posture container;

a second determination module, configured to determine a body posture corresponding to the current frame of lane line point cloud through a posture difference according to a second timestamp corresponding to the current frame of lane line point cloud and the posture container;

a queue storage module, configured to store the current frame of lane line point cloud and the body posture corresponding to the current frame of lane line point cloud into a point cloud queue with a fixed length, wherein the point cloud queue comprises a plurality of historical frames of lane line point clouds and body postures corresponding to the plurality of historical frames of lane line point clouds; and

a splicing module, configured to splice all lane line point clouds in the point cloud queue to obtain a multi-frame lane line splicing point cloud.

12. An electronic device, comprising a memory, a processor, and a computer program stored in the memory and executable on the processor, wherein when the computer program is executed by the processor, the lane line point cloud splicing method according to any one of claims 1 to 10 is implemented.

13. A computer-readable storage medium, the computer-readable storage medium storing a computer program, wherein when the computer program is executed by a processor, the lane line point cloud splicing method according to any one of claims 1 to 10 is implemented.

14. A vehicle, comprising a positioning system configured to perform the lane line point cloud splicing method according to any one of claims 1 to 10.

Fig. 1

Fig. 2

Fig. 3

Obtain each frame of lane line point cloud in real time   ~ S1

Obtain each frame of integrated inertial navigation data in real time   ~ S2

Perform track calculation on the each frame of integrated inertial navigation data to determine a body posture corresponding to the each frame of integrated inertial navigation data, and store the body posture corresponding to the each frame of integrated inertial navigation data and a corresponding first timestamp into a posture container   ~ S3

Determine a body posture corresponding to the current frame of lane line point cloud through a posture difference according to a second timestamp corresponding to the current frame of lane line point cloud and the posture container   ~ S4

Store the current frame of lane line point cloud and the body posture corresponding to the current frame of lane line point cloud into a point cloud queue with a fixed length, where the point cloud queue includes a plurality of historical frames of lane line point clouds and body postures corresponding to the plurality of historical frames of lane line point clouds   ~ S5

Splice all lane line point clouds in the point cloud queue to obtain a multi-frame lane line splicing point cloud   ~ S6

Fig. 4

Fig. 5

Fig. 6

Fig. 7

Fig. 8

~900

Lane line point cloud splicing apparatus

Point cloud obtaining module ~901

Data obtaining module ~902

First determination module ~903

Second determination module ~904

Queue storage module ~905

Splicing module ~906

Fig. 9

Fig. 10

Europäisches
Patentamt

European
Patent Office

Office européen
des brevets

## EUROPEAN SEARCH REPORT

**Application Number**

EP 23 21 3308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/341820 A1 (YU LI [CN] ET AL) 29 November 2018 (2018-11-29) | 1,7,8, 11-14 | INV. G01C21/36 G06V20/56 G01S17/89 |
| A | * paragraphs [0015], [0021], [0053]; claim 1 * | 2-6,9,10 | |

_____

**TECHNICAL FIELDS SEARCHED (IPC)**

G01C
G06V
G01S

The present search report has been drawn up for all claims

| Place of search | Date of completion of the search | Examiner |
|---|---|---|
| The Hague | 14 May 2024 | Kuhn, Robert |

# EP 4 471 381 A1

## ANNEX TO THE EUROPEAN SEARCH REPORT
## ON EUROPEAN PATENT APPLICATION NO.

EP 23 21 3308

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | | Publication date | Patent family member(s) | | Publication date |
|---|---|---|---|---|---|
| US 2018341820 | A1 | 29-11-2018 | CN 108955670 | A | 07-12-2018 |
| | | | US 2018341820 | A1 | 29-11-2018 |

EPO FORM P0459

For more details about this annex : see Official Journal of the European Patent Office, No. 12/82